# EUROPÄISCHE PATENTSCHRIFT

(11) **EP 0 632 447 B1**
(45) Veröffentlichungstag und Bekanntmachung des Hinweises auf die Patenterteilung: **06.10.1999**
(21) Anmeldenummer: 93110522.5
(22) Anmeldetag: 01.07.1993
(51) Int. Cl.: G11B 23/087

(54) **Vorrichtung zum Aufbringen einer mechanischen Spannung auf ein in eine Kassette eingelegtes Band**
Device for controlling a mechanical tension for a tape in a cassette
Mécanisme pour exercer une tension mécanique sur une bande dans une cassette

(43) Veröffentlichungstag der Anmeldung: 04.01.1995
(73) Patentinhaber: TANDBERG DATA ASA, 0411 Oslo (NO)
(72) Erfinder: Nielsen, Oivind André, N-0970 Oslo (NO)
(74) Vertreter: Goddar, Heinz J., Dr.

(56) Entgegenhaltungen:
- EP-A- 0 289 411
- DE-A- 3 113 437
- US-A- 3 642 225
- US-A- 3 915 409

## Beschreibung

Die Erfindung betrifft eine Vorrichtung zum Aufbringen einer mechanischen Spannung auf ein in eine Kassette eingelegtes Band, insbesondere ein schnellaufendes Band, welches von einer ersten Spule abzuwickeln ist und auf eine zweite Spule aufzuwickeln ist, wobei die Spulen auf jeweils einer Spulennabe liegen und wobei das Band um zumindest zwei Umlenkrollen geführt ist, zwischen denen es im wesentlichen geradlinig läuft.

Die mechanische Spannung eines Bandes, beispielsweise eines Magnetbandes, ist im Hinblick auf einen guten Kontakt des Magnetbandes zu einem Scheib-Lese-Kopf von Bedeutung. Dabei wird bei einer hohen Spannung ein guter Kontakt gewährleistet, während es bei einer niedrigen Spannung möglich ist, daß das Band über dem Kopf flattert. Auch Unregelmäßigkeiten auf dem Band können die Ursache für ein Abheben des Bandes vom Kopf sein. Relativ niedrige Bandspannungen treten insbesondere dann auf, wenn das Band angehalten und wieder in Bewegung gesetzt wird. Dann muß das Band für eine gewisse Zeitdauer anlaufen, bis die erforderliche Spannung für den Kontakt zum Kopf wieder aufgebaut ist. Hinzu kommt, daß die Bandspannung immer dann drastisch abfällt, wenn die Laufrichtung gewechselt wird.

Die Schwierigkeiten werden noch vergrößert, wenn die lineare Banddichte, d.h. die Anzahl der Bitübergänge pro mm, vergrößert wird. Eine hohe Dichte bedeutet damit einen vergrößerten Signalverlust, wenn die genaue Schreib- oder Leseposition nicht eingehalten wird. Da die Verluste für einen gegebenen Abstand zwischen dem Band und dem Kopf exponentiell mit der Wellenlänge des Signales anwachsen, wird das Problem des Abhebens des Bandes vom Kopf umso kritischer, je höher die Signaldichte ist.

Regelmäßig kann eine hohe Bandspannung dazu beitragen, den erforderlichen guten Band-Kopf-Kontakt herzustellen, sogar wenn geringe Bandunregelmäßigkeiten vorliegen.

Bei den üblicherweise verwendeten Kassetten wird die mechanische Spannung in dem Band durch einen Gurt erzeugt, der innerhalb der Kassette an den auf Spulen gewickelten Bändern entlangläuft. Der Gurt wird von außen angetrieben und bewegt dabei wiederum das Band, die Bewegung des Bandes baut dann die Bandspannung auf. Dieses grundsätzliche Prinzip zum Aufbau einer mechanischen Spannung auf dem Band wird seit nahezu zwanzig Jahren unverändert befolgt. Zwar wäre es möglich, die Bandspannung bei den beschriebenen Kassetten zu erhöhen, indem eine größere Reibung an Rollen erzeugt wird, um die der Gurt geführt ist, vorzugsweise an den Rollen, die in den Ecken der Kassette angeordnet sind. Jedoch erfordert eine erhöhte Reibung an diesen Rollen ein höheres Drehmoment, das aufgebracht werden muß, um die gesamte Anordnung zu bewegen, was zur Folge hat, daß ein stärkeren Motor, in der Regel damit einen größeren Motor, vorgesehen werden muß; zudem wird weitaus mehr Wärme dissipiert. Auch hätte diese Vorgehensweise den Nachteil, daß die Unterschiede in der Steifigkeit zwischen Band und Gurt voll zum Tragen kämen, und somit nach dem Anstarten des Bandes zunächst undefinierte Verhältnisse herrschen, bis in einem Gleichgewichtszustand eine stabile Bandspannung erreicht worden ist.

Die genannten Probleme verschärfen sich noch bei schnelllaufenden Bändern, d.h. insbesondere bei Anwendungen in Streamern.

DE- A- 3 113 437 beschreibt auch eine Audiokassette mit einer Federvorrichtung zum Belasten des Bandes wobei diese Vorrichtung die Gleichlaufeigenschaft des Bandes bei geringer Geschwindigkeit verbessert.

US- A- 3 915 409 beschreibt eine Audiokassette mit einer Federvorrichtung zum Belasten des Bandes zwischen der Bandspule und einer Umlenkrolle. Die Vorrichtung verhindert, daß das Band überschießt, wenn von einem schnellen Vorlaufen auf einen langsamen Abspielmodus gewechselt wird.

Es ist daher die Aufgabe der Erfindung, eine Vorrichtung zum Aufbringen einer mechanischen Spannung auf ein in eine Kassette eingelegtes Band, insbesondere ein schnellaufendes Band, zu schaffen, mit der gewährleistet ist, daß bereits beim Anstarten eines Bandes oder beim Wechsel der Bewegungsrichtung des Bandes sofort eine ausreichend hohe Bandspannung für einen guten Kontakt zum Schreib-Lese-Kopf vorliegt und dieser Kontakt auch aufrechterhalten wird, wenn Unregelmäßigkeiten im Bandlauf oder im Band selbst auftreten.

Diese Aufgabe wird von einer Vorrichtung der eingangs genannten Gattung mit den Merkmalen des kennzeichnenden Teiles von Patentanspruch 1 gelöst. Vorteilhafte Ausgestaltungen sind Gegenstand der Unteransprüche.

Erfindungsgemäß ist vorgesehen, daß zumindest im Bereich einer der Umlenkrollen und der ihr gemäß dem Bandlauf nächstliegenden Spulennabe wenigstens eine Einrichtung zum mechanischen Vorbelasten des Bandes mit variabler Kraft vorgesehen ist. Damit wird erreicht, daß praktisch zwangsläufig abhängig von der momentan vorliegenden Bandspannung diese gemäß den internen Vorgaben der Einrichtung zum mechanischen Vorbelasten des Bandes eingestellt wird. Herrscht von vornherein ein ausreichend hohe Bandspannung, so wird, wenn beispielsweise, wie bevorzugt vorgesehen ist, eine Belastung durch eine Feder aufgebracht wird, nur eine geringer Federweg erforderlich sein, um die optimale Bandspannung einzustellen. Eine geringe Bandspannung erfordert hingegen einen längeren Federweg, bis das Band so straff geführt ist, daß es die der aufgeprägten Kraft entsprechende Gegenkraft aufbringen kann.

Nach einer bevorzugten Ausführungsform ist die Einrichtung zum Vorbelasten des Bandes ein federbelasteter Bügel, der um eine Achse parallel zur Spulennabe verschwenkbar ist und dessen distales Ende an das Band anlegbar ist. Die variable Kraft ergibt sich dabei durch die veränderliche Größe des Schwenkwinkels.

Auch abhängig von dem zur Verfügung stehenden Raum in der Kassette kann der Bügel mit unterschiedlicher Formgebung, insbesondere aber gerade oder von seiner Schwenkachse zu seinem distalen Ende gekrümmt verlaufend ausgebildet sein.

Nach einer ebenso bevorzugten Ausführungsform ist die Einrichtung zum mechanischen Vorbelasten des Bandes ein federbelasteter Stift, der entlang eines vorgegebenen oder vorgebbaren Weges bewegbar ist und dessen Längsachse im wesentlichen parallel zur Spulennabe ausgerichtet ist. Die variable Kraft ergibt sich hier über die zurückgelegte Strecke des Stiftes entlang des besagten Weges.

Der Weg kann geradlinig oder gekrümmt verlaufen, die entsprechende Führung wird beispielsweise durch ein Langloch gebildet, in das der Stift teilweise eingreift.

Die Federbelastung kann bei allen Ausführungsformen der Erfindung durch eine Spiralfeder erzeugt werden.

Im folgenden soll die Erfindung lediglich beispielhaft anhand der beigefügten Zeichnungen näher erläutert werden.
Dabei zeigt:
- Figur 1: die Draufsicht auf eine Kassette mit eingelegtem Band, bei abgehobenem Kassettendeckel, gemäß dem Stand der Technik;
- Figur 2: die Draufsicht auf eine Kassette mit abgenommenem Deckel mit einer ersten Ausführungsform der Erfindung;
- Figur 3: die Draufsicht auf eine Kassette mit abgenommenem Deckel mit einer zweiten Ausführungsform der Erfindung, und
- Figur 4: eine Detailansicht aus Figur 3.

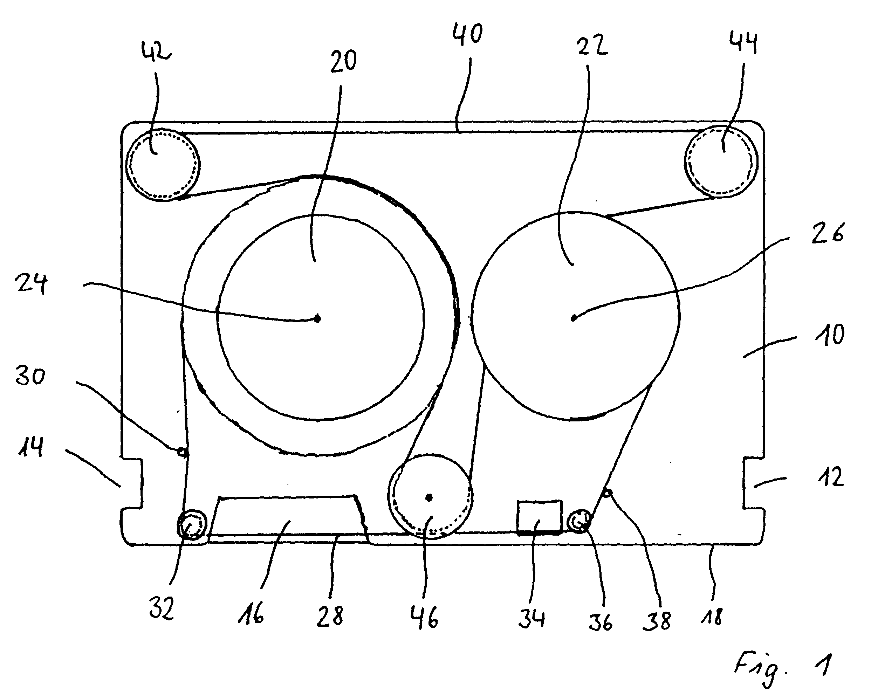

Figur 1 zeigt eine Ansicht auf eine Grundplatte einer Kassette nach dem Stand der Technik mit eingelegten Band und mit Bandantrieb. Die im wesentlichen rechteckige Grundplatte 10 weist an ihren beiden kürzeren Seiten, im Bereich zweier Ecken, je eine Ausnehmung 12, 14 auf, die zum Ausrichten der Kassette in einem Bandgerät dienen. In dem durch die Lage dieser beiden Ausnehmungen 12, 14 definierten vorderen Bereich befindet sich nahe der Ausnehmung 14 an der Längsseite 18 der Grundplatte 12 eine weitere, trapezförmige Ausnehmung 16, die bei aufgelegtem Deckel mit einer schwenkbaren Klappe verschlossen ist, welche sich beim Einlegen der Kassette in ein Bandgerät öffnet und den Zugriff eines Magnetkopfes, beispielsweise eines Schreib-Lese-Kopfes, auf ein hier vorbeilaufendes Band 28 freigibt. Das Band 28 ist auf zwei Spulen, 20, 22 aufgewickelt, welche um Spulennaben 24, 26 drehbar sind. Je nach Laufrichtung des Bandes 28 wird dieses auf eine der Spulen aufgewickelt, von der anderen abgewikkelt. Im Bereich der vorderen Längskante 18 der Grundplatte 12 sind beabstandet voneinander zwei Umlenkrollen 32, 36 drehbar gelagert, welche einen Reibbelag aufweisen und das Band 28 im wesentlichen geradlinig, d.h. parallel zur Längskante 18, zwischen sich führen. Weiterhin sind nahe den Umlenkrollen 32, 36, aber von der Längskante 18 weiter entfernt als diese, Führungsstifte 30, 38 vorgesehen, an denen das Band 28 gleitend entlangläuft. Dem Bandantrieb dient ein System aus einem Endlosgurt 40 und Rollen 42, 44, 46. Dabei befinden sich zwei der Rollen 42, 44 im Bereich der Ecken der Grundplatte 10 gegenüber der Längskante 18, die dritte Rolle 46, die die eigentliche Antriebsrolle ist, in der Nähe der Längskante 18, wobei deren Drehachse im wesentlichen in der Mittelebene zwischen den beiden Spulennaben 24, 26 liegt. Der Endlosgurt 40 ist so geführt, daß er einerseits um die Rollen 42, 44 läuft, dann entlang der Spule 26 in kraftschlüssigem Kontakt mit dem Band 28, anschließend um die Antriebsrolle 46, wobei das hier vorbeigeführte Band 28 auf dem Gurt liegt, und schließlich um die Spule 20, wiederum in Kraftschluß mit dem auf der Spule befindlichen Band zurück zur Rolle 42. Ein geeigneter Antrieb versetzt die Antriebsrolle 46 in Drehung und bewegt damit den Endlosgurt 40, der wiederum auf das Band 28 einwirkt und nach einer gewissen Zeit, nach der sich ein Gleichgewicht zwischen den Spannungen von Endlosgurt 40 und Band 28 einstellt, einen Bandlauf mit einer im wesentlichen durch die Eigenschaften des Endlosgurtes 40 bestimmten Bandspannung erzeugt. Nahe der Umlenkrolle 36 ist ein Spiegel 34 vorgesehen, mit dem Lage des Bandes 28 überwacht werden kann.

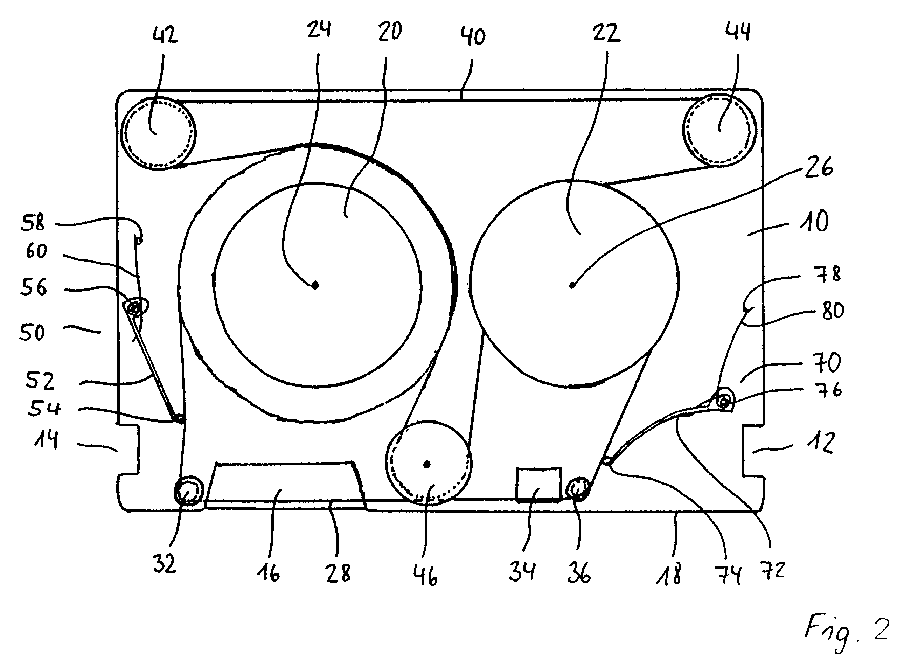

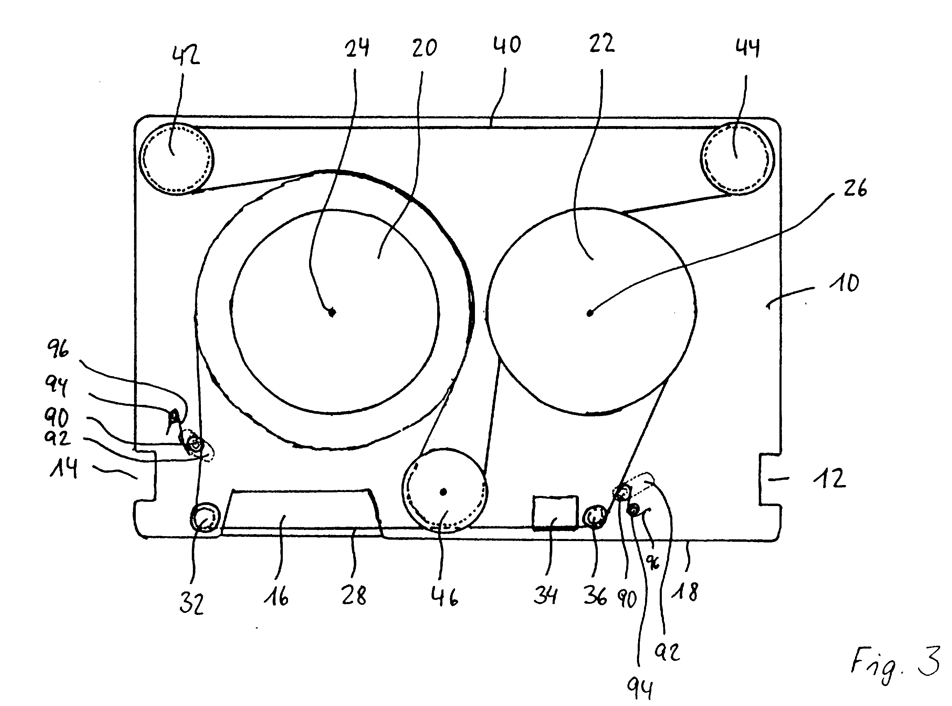

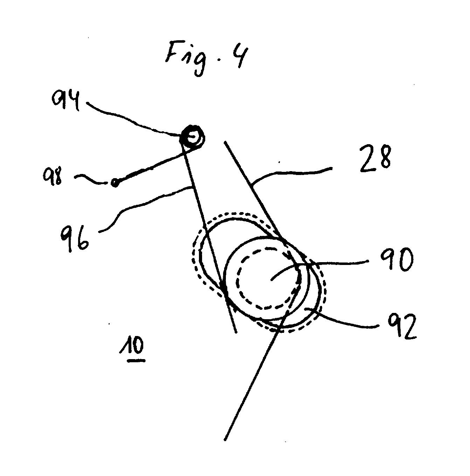

Für die einzelnen Ausfürhrungsformen der Erfindung wurde dieser grundsätzliche Aufbau beibehalten. Lediglich die Führungsstifte 30, 38 werden sowohl in dem Beispiel nach Figur 2 als auch in dem Beispiel nach den Figuren 3 und 4 nicht mehr verwendet. Im übrigen wird auch Insbesondere im Hinblick auf die Figuren 2 und 3 auf die Zeichnungsbeschreibung der Figur 1 Bezug genommen.

Eine erste Ausführungsform der Erfindung ist in Figur 2 dargestellt. Jeweils eine Einrichtung 50, 70 zum mechanischen Vorbelasten des Bandes mit variabler Kraft ist so auf der Grundplatte 10 angordnet, daß sie einerseits auf das Band 28 auf dem Weg von der Spule 20 zur Umlenkrolle 32 bzw. von der Umlenkrolle 36 zur Spule 22 einwirken. Die Wirkposition der Kraft entspricht dabei im wesentlichen der Position der Führungsstifte 30, 38 der Kassette gemäß des Standes der Technik wie in Figur 1 dargestellt. Die Einrichtung 50, im folgenden Vorspanneinrichtung genannt, besteht aus einem Bügel 52, der um eine Drehachse 56 verschwenkbar ist, die sich senkrecht von der Grundplatte 10 erstreckt, d. h. im wesentlichen parallel zu der Spulennabe 24 ausgerichtet ist. Das distale Ende des Bügels 52 bildet einen Anlagebereich 54 an das Band 28. Um die Drehachse 56 ist eine Spiralfeder 60 gelegt, die einerseits am Bügel 52 befestigt ist, andererseits durch einen Stützstift 58 und gegebenfalls durch Kassettendeckel vorgesehene Vorsprünge und dergleichen, die hier jedoch nicht dargestellt sind, so gehalten ist, daß mit ihrer Hilfe eine Federkraft auf den Bügel aufgebracht werden kann. Der hier in gerader Form ausgebildete Bügel 52 wird somit um einen bestimmten Winkel verschwenkt, der von der momentanen Spannung des Bandes 28 am Anlagebereich 54 abhängt. Entsprechend ist die Einrichtung 70, im folgenden ebenfalls als Vorspanneinrichtung bezeichnet, im Bereich der gegenüberliegenden Seitenkante der Grundplatte 10 vorgesehen, wobei die Wirkposition nunmehr an der Stelle des Führungsstiftes 38 auf das Band 28 wirkt. Die Vorspanneinrichtung 70 besteht wiederum aus einem Bügel 72, der aber von der Drehachse 76 zum Anlagebereich 74 hin gekrümmt verläuft. Eine Spiralfeder 80 ist wie zuvor einerseits am Bügel 72 und andererseits an einem Stützstift 80 bzw. an Vorsprüngen des Kassettendeckels oder dergleichen festgelegt, so daß die erforderliche Kraft auf den Bügel 72 aufgebracht werden kann.

In den Figuren 3 und 4 ist eine zweite Ausführungsform der Erfindung dargestellt. Zwei Vorspanneinrichtungen sind an den Stellen wie in Figur 2 beschrieben angeordnet, wobei die Wirkungsstelle der variablen Kraft wiederum etwa im Bereich der Stüztstifte 30, 38 der Kassette nach dem Stand der Technik (Figur 1) liegt. Die variable Kraft wird nunmehr durch einen Stützstift 90 auf das Band 28 aufgebracht, wobei der Stützstift 90 sich in einem Langloch 92 bewegen kann. Eine Spiralfeder 26, die auf einen Pin 94 gesteckt ist und an der Grundplatte 10 festgelegt ist, drückt gegen den Sift 90 und zwingt diesen, abhängig von der momtanen Spannung des Bandes 28, mehr oder weniger weit entlang des Langloches. Beide Vorspanneinrichtungen, die in der Nähe der Umlenkrolle 32 sowie die in der Nähe der Umlenkrolle 36, sind im wesentlichen identisch aufgebaut.

Eine Detailansicht ist in Figur 4 dargestellt. Das Langloch 92 in Form eines Ovales ist mit einer umlaufenden Führungsnut and der Unterseite der Grundplatte 10 versehen. Der Stift 90 ist so ausgebildet, daß sein unterer Bereich in dieser Führungsnut, deren Begrenzung durch ein gestrichelte Linie um das Langloch 92 angedeutet ist, laufen kann. Im übrigen sind Maßnahmen getragen, den Stift 90 unverlierbar in dem Langloch 92 zu halten. Unter Einwirkung der Spiralfeder 96 kann sich der Stift 90 im Langloch 92 gleitend bewegen. Die Spiralfeder 96 ist um einen Pin 94, der sich im wesentlichen senkrecht von der Grundplatte 10 erstreckt, gelegt, wobei ein Schenkel in einer Bohrung 98 in der Grundplatte 10 festgelegt ist und der andere gegen den Stift 90 drückt.

Um die durch die Erfindung erzielbaren Verbesserungen zu überprüfen, wurden zwei Kassetten mit bekannt schlechten Wiedergabe- bzw. Aufzeichungseigenschaften mit Einrichtungen zum mechanischen Vorspannen des Bandes gemäß der vorliegenden Erfindung versehen.

Kassette I hatte wiederholt eine hohe Anzahl schlechter Blöcke aufgewiesen, typischerweise 85 bis 100 pro Spur, Kassette II verhielt sich noch schlechter. Dabei wird eine Schreiboperation erst dann abgebrochen, wenn ein Block nach 16 Versuchen nicht geschrieben werden kann. Dies entspricht einer Bandentfernung von mehr 10 cm.

Nach der Modifikation mit der Erfindung gemäß einer der Ausführungsformen der Erfindung zeigte die Kassette I eine Verbesserung um 75%, die Kassette II benötigte nur noch 62 Schreibversuche pro Spur. Ähnliche Qualitätsverbesserungen zeigten sich beim Austausch der Bänder in den Kassetten und beim Verwenden anderer Bänder mit bekannt hohen Schreibfehlerraten.

### Bezugszeichenliste

- 10: Grundplatte
- 12: Ausnehmung
- 14: Ausnehmung
- 16: trapezförmige Ausnehmung
- 20: Spule
- 22: Spule
- 24: Spulennabe
- 26: Spulennabe
- 28: Band
- 30: Führungsstift
- 32: Umlenkrolle
- 34: Spiegel
- 36: Umlenkrolle
- 38: Führungsstift
- 40: Endlosgurt
- 42: Rolle
- 44: Rolle
- 46: Antriebsrolle
- 50: Vorspanneinrichtung
- 52: Bügel
- 54: Anlagebereich, distales Ende
- 56: Drehachse
- 58: Stützstift
- 60: Spiralfeder
- 70: Vorspanneinrichtung
- 72: Bügel
- 74: Anlagebereich, distales Ende
- 76: Drehachse
- 78: Stützstift
- 80: Spiralfeder
- 90: Stift
- 92: Langloch
- 94: Pin
- 96: Spiralfeder
- 98: Bohrung

## Patentansprüche

1. Vorrichtung zum Aufbringen einer mechanischen Spannung auf ein in eine Kassette eingelegtes Band, wobei die Kassette in Streamern und ähnlichen Anwendungen, bei denen ein schnellaufendes Band erforderlich ist, verwendet wird, wobei die Spulen auf jeweils einer Spulennabe liegen und wobei das Band von einer ersten Spule abzuwickeln und auf eine zweite Spule aufzuwickeln ist und um mindestens zwei Umlenkrollen geführt ist, zwischen denen es im wesentlichen geradlinig läuft, und wobei der Bandantrieb durch einen Endlosriemen erfolgt, der auf Abschnitte des um die Spulen gewickelten Bandes wirkt,
**dadurch gekennzeichnet**, daß zumindest im Bereich einer der Umlenkrollen (32, 34) und der ihr gemäß dem Bandlauf nächstliegenden Spulennabe (24, 26) wenigstens eine Einrichtung (50, 70; 90, 92, 96) zum Federbelasten des Bandes vorgesehen ist.

2. Vorrichtung nach Anspruch 1, dadurch gekennzeichnet, daß die Einrichtung zum Federbelasten des Bandes ein federbelasteter Bügel (52, 72) ist, der um eine Achse parallel zur Spulennabe (24, 26) verschwenkbar ist und dessen distales Ende (54, 74) an das Band anlegbar ist.

3. Vorrichtung nach Anspruch 2, dadurch gekennzeichnet, daß der Bügel (52) gerade ist.

4. Vorrichtung nach Anspruch 2, dadurch gekennzeichnet, daß der Bügel (72) von seiner Schwenkachse (76) zu seinem distalen Ende (74) gekrümmt verläuft.

5. Vorrichtung nach Anspruch 1, dadurch gekennzeichnet, daß die Einrichtung zum Federbelasten des Bandes ein federbelasteter Stift (90) ist, der entlang eines vorgebbaren Weges (92) bewegbar ist und dessen Längsachse im wesentlichen parallel zur Spulennabe (24, 26) ausgerichtet ist.

6. Vorrichtung nach Anspruch 5, dadurch gekennzeichnet, daß der Stift (90) in einem Langloch (92) geführt ist.

7. Vorrichtung nach einem der Ansprüche 1 bis 6, dadurch gekennzeichnet, daß die Einrichtung zum Federbelasten des Bandes eine Spiralfeder (60, 80, 96) umfaßt.

## Claims

1. Device for applying a mechanical tension onto a tape inserted into a cartridge, wherein said cartridge is used in streamers and similar applications, in which a fast running tape is required, wherein tape reels are each placed on one reel hub, wherein said tape is to be wound off a first reel and to be wound on a second reel and is guided around at least two deflection rollers, between which it is running substantially linearly, and wherein the tape drive is provided by an endless belt, which operates on sections of said tape wound on said reels, characterized in that at least in the region of one of said deflection rollers (32, 34) and of said reel hub (24, 26) being closest according to the tape run at least one device (50, 70; 90, 92, 96) for a spring loading of said tape is provided.

2. Device according to claim 1, characterized in that said device for spring loading said tape is a spring loaded clip (52, 72), which is swivelling around an axis parallel to said reel hub (24, 26) and whose distal end (54, 74) can be put against said tape.

3. Device according to claim 2, characterized in that said clip (52) is straight.

4. Device according to claim 2, characterized in that said clip (72) takes an arcuate course from its swivelling axis (76) to its distal end (74).

5. Device according to claim 1, characterized in that said device for spring loading said tape is a spring loaded pin (90), which is movable along a determinable path (92) and whose longitudinal axis is oriented substantially parallel to said reel hub (24, 26).

6. Device according to claim 5, characterized in that said pin (90) is guided within an elongated hole (92).

7. Device according to one of the claims 1 to 6, characterized in that said device for spring loading said tape comprises a spiral spring (60, 80, 96).

## Revendications

1. Dispositif d'application d'une tension mécanique sur une bande insérée dans une cassette, la cassette étant utilisée dans des applications du genre dérouleurs et analogues, pour lesquelles il est nécessaire d'avoir une bande défilant rapidement, les bobines étant placées chacune sur un moyeu à bobine, la bande étant déroulée d'une première bobine et enroulée sur une deuxième bobine et guidée autour d'au moins deux rouleaux de renvoi, entre lesquels elle défile sensiblement selon un tracé rectiligne, et l'entraînement de bande s'effectuant au moyen d'une courroie continue agissant sur des tronçons de la bande enroulée sur des bobines,
caractérisé par le fait que, au moins dans la zone de l'un des galets de renvoi (32, 34) et du moyeu de bobine (24, 26) situé le plus près selon le tracé de la bande, est prévu au moins un dispositif (50, 70 ; 90, 92, 96) destiné à produire une charge élastique sur la bande.

2. Dispositif selon la revendication 1, caractérisé par le fait que le dispositif destiné à produire une charge élastique sur la bande est un étrier (52, 72) chargé par un ressort, pouvant pivoter autour d'un axe parallèle à l'axe de moyeu de bobine (24, 26) et dont l'extrémité distale (54, 74) est applicable sur la bande.

3. Dispositif selon la revendication 2, caractérisé par le fait que l'étrier (52) est rectiligne.

4. Dispositif selon la revendication 2, caractérisé par le fait que l'étrier (72) a une allure incurvée depuis son axe de pivotement (76) vers son extrémité distale (74).

5. Dispositif selon la revendication 1, caractérisé par le fait que le dispositif de chargement élastique de la bande est une tige (90) chargée par un ressort, déplaçable le long d'une trajectoire (92) prédéterminable et dont l'axe longitudinal est orienté sensiblement parallèlement au moyeu de bobine (24, 26).

6. Dispositif selon la revendication 5, caractérisé par le fait que la tige (90) est guidée dans un trou oblong (92).

7. Dispositif selon l'une des revendications 1 à 6, caractérisé par le fait que le dispositif de chargement élastique de la bande comprend un ressort spiral (60, 80, 96).
